# EUROPÄISCHE PATENTSCHRIFT

(11) **EP 4 000 721 B1**
(45) Veröffentlichungstag und Bekanntmachung des Hinweises auf die Patenterteilung: **07.01.2026**
(21) Anmeldenummer: 21208962.7
(22) Anmeldetag: 18.11.2021
(51) Int. Cl.: B01D 63/08, H01M 8/04

(54) **BEFEUCHTER**
HUMIDIFIER
HUMIDIFICATEUR

(30) Priorität: 19.11.2020 DE 102020214609; 12.03.2021 DE 102021202430
(43) Veröffentlichungstag der Anmeldung: 25.05.2022
(73) Patentinhaber: MAHLE International GmbH, 70376 Stuttgart (DE)
(72) Erfinder: BAUMGART, Tobias, 73650 Winterbach (DE); KAISER, Sven Alexander, 71336 Waiblingen (DE); LOHRE, Christoph, 71272 Renningen (DE); WALZ, Michael, 70794 Filderstadt (DE)
(74) Vertreter: BRP Renaud & Partner mbB Rechtsanwälte Patentanwälte Steuerberater

(56) Entgegenhaltungen:
- WO-A1-2020/009580
- US-A- 3 993 816
- US-A1- 2013 101 909
- US-A1- 2014 262 144
- US-A1- 2017 279 138

## Beschreibung

Die Erfindung betrifft einen Befeuchter zum Befeuchten einer trockenen Kathoden-Zuluft mittels einer feuchten Kathoden-Abluft in einem Brennstoffzellensystem nach dem Oberbegriff des Anspruchs 1.

Ein Befeuchter in einem Brennstoffzellensystem wird zum Befeuchten einer trockenen Kathoden-Zuluft mittels einer feuchten Kathoden-Abluft eingesetzt. Das Brennstoffzellensystem kann insbesondere zum Antrieb von Fahrzeugen verwendet werden. Dabei umfasst ein gattungsgemäßer Befeuchter üblicherweise ein Gehäuse und einen Membranstapel, der in dem Gehäuse aufgenommen ist und mehrere beabstandet zueinander gestapelte Membranen aufweist. Zwischen den benachbarten Membranen des Membranstapels sind Kanäle gebildet, die alternierend durch die Kathoden-Zuluft und die Kathoden-Abluft durchströmt sind. Die Membranen sind dabei luftundurchlässig und wasserdampfdurchlässig, so dass die Kathoden-Zuluft und die Kathoden-Abluft durch die Membranen getrennt sind und dennoch die Kathoden-Zuluft durch die Membranen hindurch mit der Kathoden-Abluft befeuchtet werden kann.

In dem Gehäuse des Befeuchters werden die Kathoden-Zuluft und die Kathoden-Abluft voneinander und auch der Membranstapel von dem Gehäuse abgedichtet.

Aus DE 10 2014 006 394 A1 ist bekannt, den Membranstapel in dem Gehäuse durch mehrere Dichtungen abzudichten. Nachteiligerweise ist eine derartige Abdichtung sehr aufwändig. Ferner können Toleranzen zwischen dem Gehäuse und dem Membranstapel nur geringfügig ausgeglichen werden.

US 2014/0262144 A1 offenbart einen Membranstapel mit mehreren Membranen. An den Membranen sind seitliche Halteelemente angeordnet, die an stirnseitigen Schließplatten befestigt sind und den Membranstapel zusammenhalten.

US 2013/0101909 A1 offenbart einen Befeuchter mit einem Membranstapel und einem Gehäuse. Der Membranstapel ist zu dem Gehäuse über zwei Ringdichtungen abgedichtet.

US 3 993 816 A offenbart einen Befeuchter mit mehreren Membranstapeln. In dem Gehäuse sind zudem mehrere Rahmen angeordnet, die die Membranstapel zueinander anordnen.

US 2017/0279138 A1 offenbart einen Befeuchter mit einem Membranstapel und vier Ein- und Auslasskappen. Die Ein- und Auslasskappen sind mit dem Membranstapel dichtend verbunden und dadurch sind die durchströmbaren Flächen des Membranstapels voneinander luftdicht getrennt.

WO 2020/009580 A1 offenbart eine Membrananordnung mit einem Membranblock in einem Gehäuse. Der Membranblock ist zu dem Gehäuse durch längliche Dichtungen abgedichtet.

Die Aufgabe der Erfindung ist es daher, für einen Befeuchter der gattungsgemäßen Art eine verbesserte oder zumindest alternative Ausführungsform anzugeben, bei der die beschriebenen Nachteile überwunden werden. Dabei sollte die Abdichtung und die Montage des Befeuchters vereinfacht werden und ein Ausgleich von Toleranzen zwischen dem Gehäuse und dem Membranstapel ermöglicht werden.

Diese Aufgabe wird erfindungsgemäß durch den Gegenstand der unabhängigen Ansprüche gelöst. Vorteilhafte Ausführungsformen sind Gegenstand der abhängigen Ansprüche.

Ein Befeuchter ist zum Befeuchten einer trockenen Kathoden-Zuluft mittels einer feuchten Kathoden-Abluft in einem Brennstoffzellensystem vorgesehen. Insbesondere kann das Brennstoffzellensystem zum Erzeugen von elektrischer Energie zum Antreiben eines Fahrzeugs vorgesehen sein. Der Befeuchter weist dabei ein Gehäuse mit einem Gehäuseinnenraum und einen Membranstapel auf. Der Membranstapel ist dabei von der Kathoden-Zuluft und von der Kathoden-Abluft vermischungsfrei durchströmbar. Der Membranstapel weist zwei luftdicht verschlossene Stirnflächen und vier von Luft durchströmbare Durchströmungsflächen auf, wobei die Stirnflächen quer zur Längsrichtung und zueinander beabstandet und die Durchströmungsflächen parallel zur Längsrichtung und einander paarweise im Abstand gegenüberliegend angeordnet sind. Anders formuliert sind die Durchströmungsflächen neben einander bzw. benachbart zueinander in eine Umlaufrichtung um die Längsrichtung umlaufend angeordnet. Der Membranstapel ist in dem Gehäuseinnenraum des Gehäuses so aufgenommen, dass zwischen der jeweiligen Durchströmungsfläche und dem Gehäuse jeweils eine Luftkammer zum Zuleiten oder Ableiten der Kathoden-Zuluft in einem Zuluft-Strömungspfad oder zum Zuleiten oder Ableiten der Kathoden-Abluft in einem Abluft-Strömungspfad zu/aus dem Membranstapel gebildet ist. Erfindungsgemäß weist der Befeuchter einen separaten Stapeltragrahmen auf, wobei der Membranstapel in den Stapeltragrahmen und der Stapeltragrahmen in das Gehäuse eingesetzt sind. Erfindungsgemäß dichtet zudem der Stapeltragrahmen den Membranstapel zu dem Gehäuse ab.

Der Membranstapel kann beispielweise in Form eines rechteckigen Quaders ausgebildet sein. Der Gehäuseinnenraum des Gehäuses ist zweckgemäß auf die Form des Membranstapels angepasst und kann beispielweise in Form eines Hohlzylinders ausgebildet sein. Zwischen den jeweiligen Durchströmungsflächen des Membranstapels und dem Gehäuse sind die Luftkammern ausgebildet. Die Luftkammern sind innerhalb des Gehäuses luftdicht voneinander getrennt und über den Membranstapel paarweise luftleitend miteinander verbunden. Zwei der luftleitend miteinander verbundenen Luftammern sind zum Zuleiten und Ableiten der Kathoden-Zuluft in dem Zuluft-Strömungspfad und zwei weitere der luftleitend miteinander verbundenen Luftammern sind zum Zuleiten und Ableiten der Kathoden-Abluft in dem Abluft-Strömungspfad gebildet. Die beiden Luftkammern im Zuluft-Strömungspfad und die beiden Luftkammern im Abluft-Strömungspfad sind aufgrund des Aufbaus des Membranstapels einander gegenüberliegend angeordnet. Das Gehäuse ist vorzugsweise aus Kunststoff gebildet.

Der Membranstapel ist in dem Stapeltragrahmen eingesetzt, wobei die Durchströmungsflächen zweckgemäß von Kathoden-Zuluft und Kathoden-Abluft durchströmbar bleiben. Der Stapeltragrahmen kann den Membranstapel sicher in dem Gehäuse festlegen und dadurch die Montage des Befeuchters vereinfachen. Zudem erfolgt die Abdichtung des Membranstapels zu dem Gehäuse erfindungsgemäß über den Stapeltragrahmen und dadurch vereinfacht. Ferner können Toleranzen des Membranstapels und des Gehäuses durch den Stapeltragrahmen ausgeglichen werden. Der Stapeltragrahmen ist erfindungsgemäß ein separates Element. Der Stapeltragrahmen kann vorteilhafterweise aus Kunststoff gebildet sein. Der Stapeltragrahmen kann vorteilhafterweise formstabil sein. Der Stapeltragrahmen kann vorteilhafterweise selbstragend sein.

Der Membranstapel weist mehrere Membrane auf, die in Längsrichtung beabstandet zueinander gestapelt sind. Zwischen den einzelnen Membranen sind Zuluft-Kanäle und Abluft-Kanäle gebildet. Die Zuluft-Kanäle sind dem Zuluft-Strömungspfad zugeordnet und verbinden ein erstes Paar von zwei diametral gegenüberliegenden Durchströmungsflächen luftleitend miteinander. Die Abluft-Kanäle sind dem Abluft-Strömungspfad zugeordnet und verbinden ein zweites Paar von zwei diametral gegenüberliegenden Durchströmungsflächen luftleitend miteinander. Zweckgemäß sind die Zuluft-Kanäle von dem zweiten Paar der Durchströmungsflächen und die Abluft-Kanäle von dem ersten Paar der Durchströmungsflächen luftdicht getrennt. Die Membranen des Membranstapels sind luftdicht und wasserdampfdurchlässig, so dass die Kathoden-Zuluft und die Kathoden-Abluft den Membranstapel vermischungsfrei durchströmen und die Kathoden-Zuluft über die Membranen hindurch mit der Kathoden-Abluft befeuchtet wird. Der Begriff "wasserdampfdurchlässig" bedeutet hier und weiter, dass die Membranen des Membranstapels für den Wasserdampf durchlässig sind und der Wasserdampf von der Kathoden-Abluft durch die Membranen hindurch zu der Kathoden-Zuluft durchtreten kann.

Erfindungsgemäß ist vorgesehen, dass der Stapeltragrahmen einen fachwerkartigen Grundkörper mit vier rahmenartigen Tragrahmen aufweist. Dabei liegt der jeweilige Tragrahmen an der zugeordneten Durchströmungsfläche an und ist im Bereich der Längskanten des Membranstapels, die zwischen den zwei benachbarten Durchströmungsflächen des Membranstapels gebildet sind, mit den benachbarten Tragrahmen verbunden. Eine an der Durchströmungsfläche anliegende Kontaktfläche des jeweiligen Tragrahmens folgt dementsprechend der zugeordneten Durchströmungsfläche und ist parallel zur Längsrichtung ausgerichtet. Eine weitere der Kontaktfläche gegenüberliegende Fläche des jeweiligen Tragrahmens kann beliebig ausgestaltet sein und insbesondere unter einem Winkel zu den entsprechenden weiteren Flächen der benachbarten Tragrahmen ausgerichtet sein. Der jeweilige Tragrahmen fasst die jeweilige zugeordnete Durchströmungsfläche ein und die jeweilige Durchströmungsfläche ist mit der jeweiligen zugeordneten Luftkammer durch den Tragrahmen hindurch fluidisch verbunden. Anders formuliert, liegt der Tragrahmen an der zugeordneten Durchströmungsfläche an und umläuft diese randseitig. Mittig bleibt der Tragrahmen also offen und die Durchströmungsfläche bleibt dadurch mit der jeweiligen zugeordneten Luftkammer luftleitend verbunden. Der Grundkörper kann vorteilhafterweise als ein quaderförmiges Bauteil gefertigt sein. Alternativ kann der Grundkörper als eine Abwicklung, die durch ein 90°-Aufstellen der einzelnen Tragrahmen einen Quader bildet, gefertigt sein.

Vorteilhafterweise kann der Grundkörper im Bereich seines ersten Längsendes ausgebildete erste Verbindungselemente und/oder im Bereich seines zweiten Längsendes ausgebildete zweite Verbindungselemente und/oder mittlere Verbindungselemente aufweisen. Die Verbindungselemente können dabei jeweils an zur Längsrichtung axialen Längsenden des Grundkörpers und/oder zwischen den zur Längsrichtung axialen Längsenden des Grundkörpers ausgebildet sein und die jeweiligen benachbarten Tragrahmen miteinander verbinden. Die Längsenden des Grundkörpers sind bezüglich der Längsrichtung einander gegenüberliegend ausgebildet. Vorteilhafterweise können die jeweiligen Verbindungselemente die jeweiligen benachbarten Tragrahmen starr miteinander verbinden. Alternativ können die jeweiligen Verbindungselemente die jeweiligen benachbarten Tragrahmen beweglich, insbesondere durch Filmscharniere, miteinander verbinden. Dadurch kann dann der Stapeltragrahmen gefaltet und dadurch Fertigungstoleranzen des Membranstapels ausgeglichen werden. Auf diese vorteilhafte Weise kann der Stapeltragrahmen vereinfach an dem Membranstapel montiert werden bzw. der Membranstapel vereinfacht in den Stapeltragrahmen eingesetzt werden.

Vorteilhafterweise kann zwischen den benachbarten Tragrahmen des Grundkörpers, insbesondere zwischen den ersten Verbindungselementen und zweiten Verbindungselementen, eine Kleberaupe angeordnet sein. Die Kleberaupe kann dabei den Membranstapel zu dem Grundkörper hin abdichten und insbesondere eine Abdichtung zwischen dem Zuluft-Strömungspfad und dem Abluft-Strömungspfad in dem Membranstapel bewirken. Die Kleberaupe kann dabei bereits vor dem Einsetzen des in den Stapeltragrahmen eingesetzten Membranstapels in das Gehäuse appliziert werden, wodurch die Abdichtung besonders einfach erfolgen kann.

Vorteilhafterweise kann vorgesehen sein, dass der Stapeltragrahmen einen Dichtrahmen oder zwei Dichtrahmen oder drei Dichtrahmen oder vier Dichtrahmen aufweist. Dabei liegt der jeweilige Dichtrahmen an dem Gehäuse dichtend an und der Stapeltragrahmen ist dadurch zu dem Gehäuse hin abgedichtet. Zudem ist der jeweilige Dichtrahmen jeweils einer der Durchströmungsflächen zugeordnet und fasst dabei die jeweilige zugeordnete Durchströmungsfläche ein. Die jeweilige Durchströmungsfläche ist dabei mit der jeweils zugeordneten Luftkammer durch den Dichtrahmen hindurch fluidisch verbunden.

Weist der Befeuchter den oben beschriebenen Stapeltragrahmen mit dem fachwerkartigen Grundkörper mit den vier rahmenartigen Tragrahmen, so kann der jeweilige Dichtrahmen an dem jeweiligen Tragrahmen des Grundkörpers integral ausgeformt sein. Alternativ kann der jeweilige Dichtrahmen in jeweils einer Dichtaufnahme des jeweiligen Tragrahmens des Grundkörpers angeordnet und festgelegt sein. Der Dichtrahmen kann in diesem Fall aus einem anderen Material als der jeweilige Tragrahmen geformt sein.

Vorteilhafterweise können in dem Gehäuse vier rahmenartige und den Durchströmungsflächen zugeordnete Dichtungsflächen integral geformt sein. Der jeweilige Dichtrahmen kann dann an jeweils einer der Dichtungsflächen dichtend anliegen.

Vorteilhafterweise kann vorgesehen sein, dass an dem Stapeltragrahmen in Bereich seines ersten Längsendes ausgebildete erste Führungssegmente und/oder mittlere Führungssegmente und/oder in Bereich seines zweiten Längsendes ausgebildete zweite Führungssegmente zum Führen des Stapeltragrahmens in Längsrichtung an dem Gehäuse angeordnet sind. Die Längsenden des Stapeltragrahmens sind bezüglich der Längsrichtung einander gegenüberliegend ausgebildet. Die Führungselemente können dabei im Bereich der Längskanten des Membranstapels, die zwischen den zwei benachbarten Durchströmungsflächen des Membranstapels gebildet sind, angeordnet sein. Die Führungselemente können dabei quer zur Längsrichtung von dem Stapeltragrahmen abstehen und der Stapeltragrahmen kann durch die Führungselemente an dem Gehäuse abgestützt sein. Durch die Führungselemente kann die Montage und insbesondere das Einsetzen des Stapeltragrahmens gegebenenfalls mit dem eingesetzten Membranstapel in das Gehäuse vereinfacht werden.

Vorteilhafterweise können an dem Stapeltragrahmen im Bereich der Stirnflächen des Membranstapels Endscheiben angeordnet sein und die Führungssegmente im Bereich der Endscheiben und/oder zwischen den Endscheiben ausgebildet sein. Dadurch kann der Stapeltragrahmen gegebenenfalls mit dem eingesetzten Membranstapel längsendseitig in dem Gehäuse abgestützt und dadurch vereinfacht montiert werden. Vorteilhafterweise können die Führungselemente an den ersten Filmscharmieren und an den zweiten Filmscharmieren gebildet sein. Die Endscheiben können mit dem Membranstapel stoffschlüssig oder formschlüssig oder kraftschlüssig fest verbunden sein. Insbesondere können die Endscheiben mit dem Membranstapel verklebt, verschweißt oder verklippt sein. Insbesondere können die Endscheiben die Stirnflächen des Membranstapels luftdicht verschließen.

Vorteilhafterweise können der Stapeltragrahmen und das Gehäuse so aufeinander abgestimmt sein, dass dadurch eine Drehlagenvorgabe, insbesondere mittels der Führungselemente, ausgebildet ist und der Stapeltragrahmen nur in einer vorbestimmten Drehlage in Längsrichtung in das Gehäuse einschiebbar ist. Dadurch kann eine Fehlmontage des Stapeltragrahmens gegebenenfalls mit dem eingesetzten Membranstapel verhindert werden.

Vorteilhafterweise kann vorgesehen sein, dass der Membranstapel als ein rechteckiger Quader mit zwei Stirnflächen und vier Durchströmungsflächen ausgebildet ist. Der Membranstapel weist dann mehrere luftdichte und wasserdampfdurchlässige Membrane auf, die in Längsrichtung beabstandet zueinander gestapelt sind. Zwischen den einzelnen Membranen sind Zuluft-Kanäle und Abluft-Kanäle gebildet, die dem Zuluft-Strömungspfad und dem Abluft-Strömungspfad zugeordnet sind. Die Zuluft-Kanäle und die Abluft-Kanäle sind in dem Membranstapel zweckgemäß in Längsrichtung alternierend angeordnet. Die Zuluft-Kanäle des Zuluft-Strömungspfads verbinden dabei zwei diametral gegenüberliegende Durchströmungsflächen und die Abluft-Kanäle des Abluft-Strömungspfads verbinden zwei andere diametral gegenüberliegende Durchströmungsflächen jeweils fluidisch miteinander. Zweckgemäß sind die Zuluft-Kanäle des Zuluft-Strömungspfads von den Durchströmungsflächen des Abluft-Strömungspfads und die Abluft-Kanäle des Abluft-Strömungspfads von den Durchströmungsflächen des Zuluft-Strömungspfads luftdicht getrennt. Die Membranen des Membranstapels sind luftdicht und wasserdampfdurchlässig, so dass die Kathoden-Zuluft und die Kathoden-Abluft den Membranstapel vermischungsfrei durchströmen und die Kathoden-Zuluft über die Membranen mit der Kathoden-Abluft befeuchtet wird.

Die Erfindung betrifft auch einen Membraneinsatz für den oben beschriebenen Befeuchter. Der Membraneinsatz weist dabei den Membranstapel und den Stapeltragrahmen auf, wobei der Membranstapel in den Stapeltragrahmen eingesetzt und mit dem Stapeltragrahmen unlösbar verbunden ist. Der Membraneinsatz bildet dadurch eine separate zusammenhängende Baueinheit zum Einsetzen in das Gehäuse des Befeuchters. Um Wiederholungen zu vermeiden, wird an dieser Stelle auf die obigen Ausführungen verwiesen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine teilweise Schnittansicht eines erfindungsgemäßen Befeuchters mit einem erfindungsgemäßen Membraneinsatz;
- Fig. 2: eine Frontansicht des erfindungsgemäßen Befeuchters mit dem erfindungsgemäßen Membraneinsatz;
- Fig. 3: eine Schnittansicht des erfindungsgemäßen Befeuchters;
- Fig. 4: eine Schnittansicht eines Membranstapels des erfindungsgemäßen Befeuchters;
- Fig. 5 und 6: Ansichten des erfindungsgemäßen Membraneinsatzes beim Zusammenbau;
- Fig. 7: eine Ansicht des erfindungsgemäßen Membraneinsatzes;
- Fig. 8 und 9: Ansichten des erfindungsgemäßen Membraneinsatzes an einem Längsende beim Zusammenbau;
- Fig. 10: eine teilweise Ansicht eines Gehäuses des erfindungsgemäßen Befeuchters.

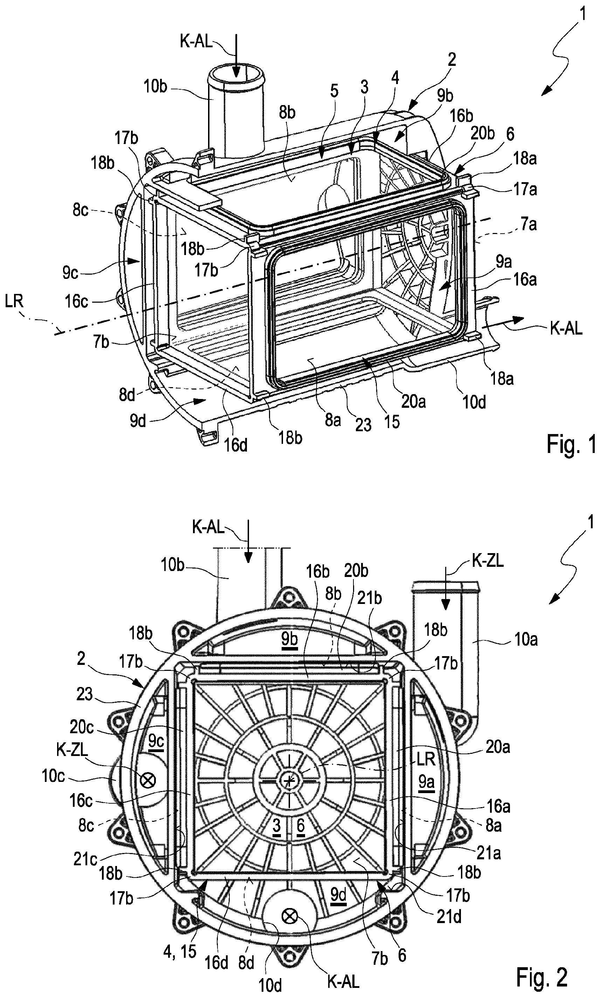

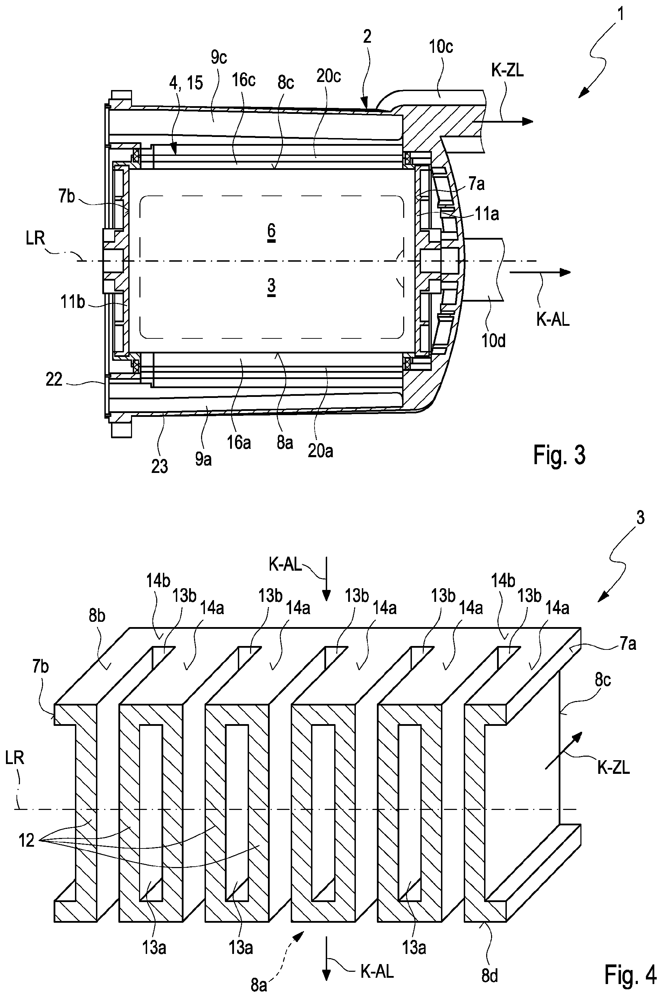

Fig. 1 zeigt eine teilweise Schnittansicht eines erfindungsgemäßen Befeuchters 1. In Fig. 2 ist eine Ansicht des Befeuchters 1 gezeigt. Fig. 3 zeigt eine Schnittansicht des Befeuchters 1. Der Befeuchter 1 ist zum Befeuchten einer trockenen Kathoden-Zuluft K-ZL mittels einer feuchten Kathoden-Abluft K-AL in einem Brennstoffzellensystem vorgesehen. Insbesondere kann das Brennstoffzellensystem zum Erzeugen von elektrischer Energie zum Antreiben eines Fahrzeugs vorgesehen sein.

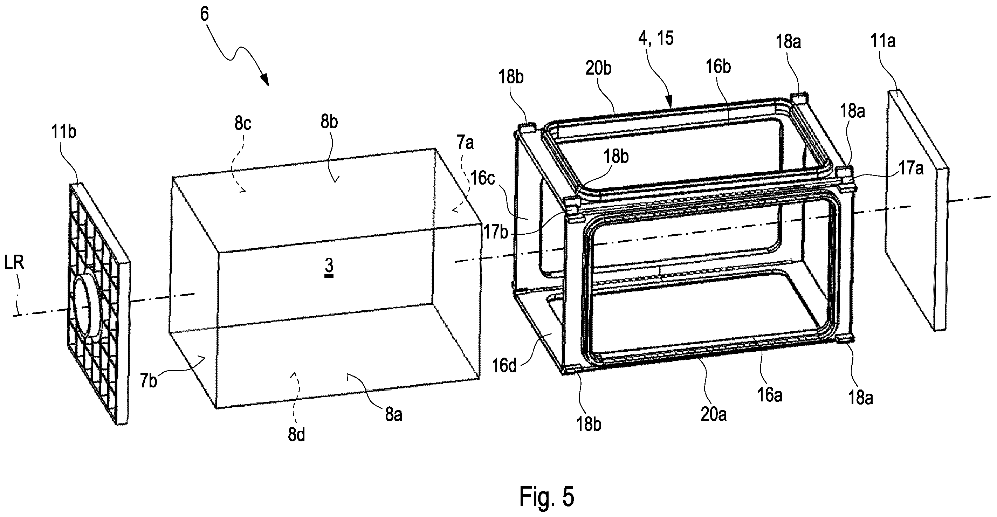

Der Befeuchter 1 weist dabei ein hohlzylindrisches Gehäuse 2 mit einem Gehäuseinnenraum 5, einen quaderförmigen Membranstapel 3 und einen fachwerkartigen Stapeltragrahmen 4 auf, die in Längsrichtung LR ausgerichtet sind. Der Membranstapel 3 ist dabei in den Stapeltragrahmen 4 und der Stapeltragrahmen 4 ist in das Gehäuse 2 eingesetzt. Das Gehäuse 2 weist dabei einen einseitig offenen Gehäusekörper 23 zum Einsetzen des Membranstapels 3 und des Stapeltragrahmens 4 und einen Deckel 22 zum Verschließen des Gehäusekörpers 23 auf. In Fig. 1-2 ist das Gehäuse 2 ohne den Deckel 22 gezeigt. Das Gehäuse 2 und der Stapeltragrahmen 4 sind vorzugsweise aus Kunststoff gebildet. In diesem Ausführungsbeispiel bilden der Membranstapel 3 und der Stapeltragrahmen 4 einen Membraneinsatz 6 für den Befeuchter 1. Dazu sind der Membranstapel 3 und der Stapeltragrahmen 4 unlösbar miteinander verbunden, so dass der Membraneinsatz 6 eine separate zusammenhängende Baueinheit zum Einsetzen in das Gehäuse 2 bildet. Der Aufbau des Membraneinsatzes 6 wird im Folgenden anhand Fig. 5-9 näher erläutert.

Der Membranstapel 3 ist von der Kathoden-Zuluft K-ZL und von der Kathoden-Abluft K-AL vermischungsfrei durchströmbar, wobei die Kathoden-Zuluft K-ZL und die Kathoden-Abluft K-AL Feuchte miteinander austauschen können. Der innere Aufbau des Membranstapels 3 wird anhand Fig. 4 näher erläutert. Der Membranstapel 3 ist quaderförmig und weist zwei Stirnflächen 7a, 7b und vier Durchströmungsflächen 8a, 8b, 8c, 8d auf. Die Stirnflächen 7a, 7b sind quer zur Längsrichtung LR im Abstand zueinander angeordnet und durch zwei Endscheiben 11a und 11b - siehe hierzu Fig. 3 - luftdicht geschlossen. Die Durchströmungsflächen 8a, 8b, 8c, 8d sind parallel zur Längsrichtung LR und einander paarweise gegenüberliegend angeordnet und sind von Luft durchströmbar. Das erste Paar der einander gegenüberliegenden Durchströmungsflächen 8a, 8c sind zum Zulauf und zum Ablauf der Kathoden-Zuluft K-ZL und das zweite Paar der einander gegenüberliegenden Durchströmungsflächen 8b, 8d sind zum Zulauf und zum Ablauf der Kathoden-Abluft K-AL vorgesehen.

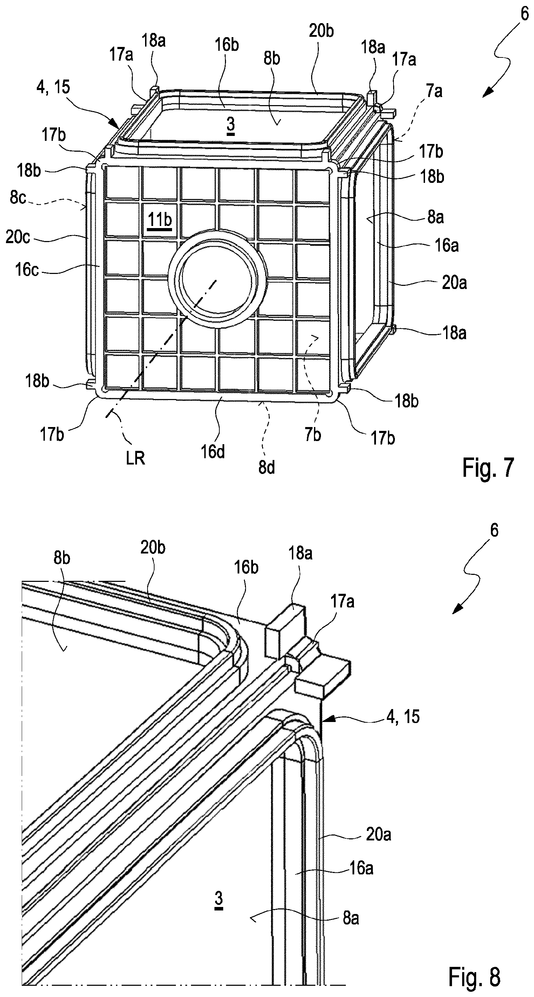

Bezugnehmend auf Fig. 1-2 sind zwischen den Durchströmungsflächen 8a, 8b, 8c, 8d des Membranstapels 3 und dem Gehäuse 2 vier Luftkammern 9a, 9b, 9c, 9d in dem Gehäuseinnenraum 5 gebildet. Die Luftkammern 9a, 9b, 9c, 9d sind dabei in der Umlaufrichtung benachbart und der entsprechenden Durchströmungsfläche 8a, 8b, 8c, 8d zugeordnet. Die Luftkammern 9a, 9b, 9c, 9d sind in dem Gehäuseinnenraum 5 über den Stapeltragrahmen 4 luftdicht voneinander getrennt. Dazu ist der Membranstapel 3 zu dem Stapeltragrahmen 4 und der Stapeltragrahmen 4 zu dem Gehäuse 2 hin abgedichtet. Die Abdichtung des Membranstapels 3 zu dem Stapeltragrahmen 4 wird im Folgenden anhand Fig. 8-9 näher erläutert. Die Abdichtung des Stapeltragrahmens 4 zu dem Gehäuse 2 hin wird im Folgenden anhand Fig. 5-10 näher erläutert. Die einander gegenüberliegenden Luftkammern 9a, 9c sind über den Membranstapel 3 luftleitend miteinander verbunden und zum Zulauf und zum Ablauf der Kathoden-Zuluft K-ZL vorgesehen. Die einander gegenüberliegenden Luftkammern 9b, 9d sind über den Membranstapel 3 luftleitend miteinander verbunden und zum Zulauf und zum Ablauf der Kathoden-Abluft K-AL vorgesehen. In die jeweilige Luftkammer 9a, 9b, 9c, 9d führt von außen jeweils ein Stutzen 10a, 10b, 10c, 10d.

Bezugnehmend auf Fig. 2 ist in dem Befeuchter 1 ein Zuluft-Strömungspfad gebildet, bei dem die Kathoden-Zuluft K-ZL über den Stutzen 10a in die Luftkammer 9a geführt wird; in der Luftkammer 9a an der Durchströmungsfläche 8a in den Membranstapel 3 eintritt; in dem Membranstapel 3 Wasser bzw. Feuchte von der Kathoden-Abluft K-AL aufnimmt; an der Durchströmungsfläche 8c aus dem Membranstapel 3 in die Luftkammer 9c ausstritt; aus der Luftkammer 9c über den Stutzen 10c aus dem Befeuchter 1 geführt wird. Bezugnehmend auf Fig. 2 ist in dem Befeuchter 1 zudem ein Abluft-Strömungspfad gebildet, bei dem die Kathoden-Abluft K-AL über den Stutzen 10b in die Luftkammer 9b geführt wird; in der Luftkammer 9b an der Durchströmungsfläche 8b in den Membranstapel 3 eintritt; in dem Membranstapel 3 Wasser bzw. Feuchte an die Kathoden-Zuluft K-ZL abgibt; an der Durchströmungsfläche 8d aus dem Membranstapel 3 in die Luftkammer 9d ausstritt; aus der Luftkammer 9d über den Stutzen 10d aus dem Befeuchter 1 geführt wird. In dem Befeuchter 1 kann auf diese Weise die trockene Kathoden-Zuluft K-ZL mittels der feuchten Kathoden-Abluft K-AL befeuchtet werden.

Fig. 4 zeigt nun eine Schnittansicht des Membranstapels 3 des Befeuchters 1. Der Membranstapel 3 ist ein rechteckiger Quader und weist mehrere Membrane 12 auf, die in Längsrichtung LR beabstandet zueinander gestapelt sind. Zwischen den einzelnen Membranen 12 sind Zuluft-Kanäle 13a und Abluft-Kanäle 13b gebildet, die sich in Längsrichtung LR abwechseln. Die Zuluft-Kanäle 13a sind dem Zuluft-Strömungspfad zugeordnet und verbinden die diametral gegenüberliegende Durchströmungsflächen 8a und 8c luftleitend miteinander. Von den nicht zugeordneten Durchströmungsflächen 8b und 8d sind die Zuluft-Kanäle 13a durch Schließflächen 14a luftdicht getrennt. Die Abluft-Kanäle 13b sind dem Abluft-Strömungspfad zugeordnet und verbinden die diametral gegenüberliegende Durchströmungsflächen 8b und 8d luftleitend miteinander. Von den nicht zugeordneten Durchströmungsflächen 8a und 8c sind die Abluft-Kanäle 13b durch Schließflächen 14b luftdicht getrennt.

Die Membranen 12 des Membranstapels 3 sind luftdicht und wasserdampfdurchlässig, so dass die Kathoden-Zuluft K-ZL und die Kathoden-Abluft K-AL den Membranstapel 3 vermischungsfrei durchströmen und die Kathoden-Zuluft K-ZL über die Membranen 12 hindurch mit der Kathoden-Abluft K-AL befeuchtet wird. In dem Membranstapel 3 strömt also die Kathoden-Zuluft K-ZL von der Durchströmungsfläche 8a über die Zuluft-Kanäle 13a zu der Durchströmungsfläche 8c und die Kathoden-Abluft K-AL von der Durchströmungsfläche 8b über die Abluft-Kanäle 13b zu der Durchströmungsfläche 8d. Die Kathoden-Zuluft K-ZL und die Kathoden-Abluft K-AL durchströmen den Membranstapel 3 senkrecht zueinander. Die längsendseitigen Zuluft-Kanäle 13a sind durch die Endscheiben 11a und 11b - hier nicht gezeigt - luftdicht geschlossen. Die Endscheiben 11a, 11b verbessern die mechanische Stabilität des Membranstapels 3 bzw. des Membraneinsatzes 6.

Fig. 7 zeigt eine Ansicht des Membraneinsatzes 6. Der Membraneinsatz 6 umfasst dabei den Membranstapel 3 und den Stapeltragrahmen 4. Der Membranstapel 3 ist dabei an den Stirnflächen 7a, 7b mit den Endscheiben 11a, 11b luftdicht geschlossen und in den Stapeltragrahmen 4 eingesetzt. Der Stapeltragrahmen 4 weist dabei einen fachwerkartigen Grundkörper 15 mit vier rahmenartigen Tragrahmen 16a, 16b, 16c, 16d auf. Die Tragrahmen 16a, 16b, 16c, 16d liegen dabei an den zugeordneten Durchströmungsflächen 8a, 8b, 8c, 8d an, wobei die jeweilige Durchströmungsfläche 8a, 8b, 8c, 8d durchströmbar bleibt. Vorzugsweise ist der Grundkörper 15 als Kunststoffspritzgussteil ausgeführt.

Die benachbarten Tragrahmen 16a, 16b, 16c, 16d sind an ihren in Längsrichtung LR ausgerichteten Rahmenkanten jeweils unlösbar miteinander verbunden. Dazu sind im Bereich der Endscheibe 11a bzw. der Stirnfläche 7a erste Verbindungselemente 17a und im Bereich der Endscheibe 11b bzw. der Stirnfläche 7b zweite Verbindungselemente 17b vorgesehen. An den ersten Verbindungselementen 17a sind zudem erste Führungssegmente 18a und an den zweiten Verbindungselementen 17b sind zweite Führungssegmente 18b an dem Stapeltragrahmen 4 ausgeformt. Die Führungselemente 18a, 18b sind dabei im Bereich der Verbindungselemente 17a, 17b ausgeformt und stehen quer zur Längsrichtung LR von den Tragrahmen 16a, 16b, 16c, 16d ab. Bezugnehmend auf Fig. 2 sind die Führungselemente 18a, 18b an inneren Führungsflächen des Gehäuses 2 abstützt und dadurch kann der Stapeltragrahmen 4 in Längsrichtung LR an dem Gehäuse 2 geführt werden.

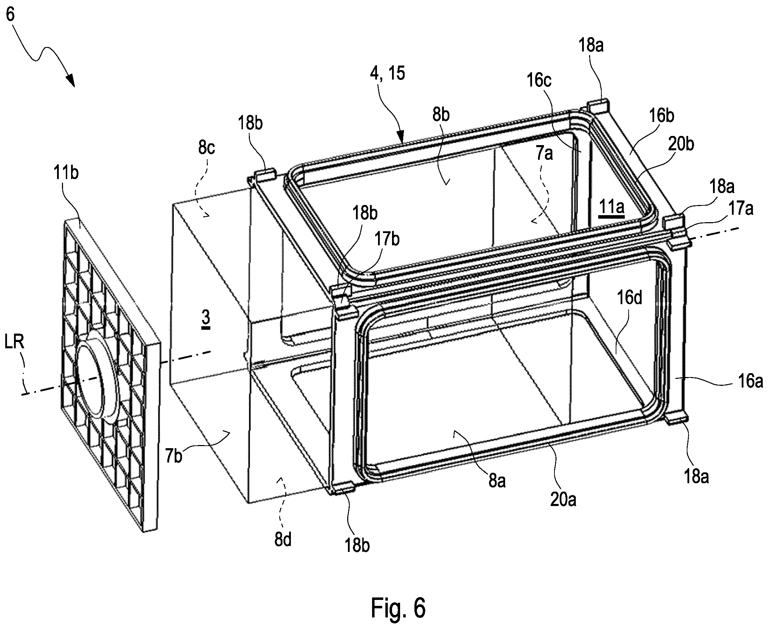

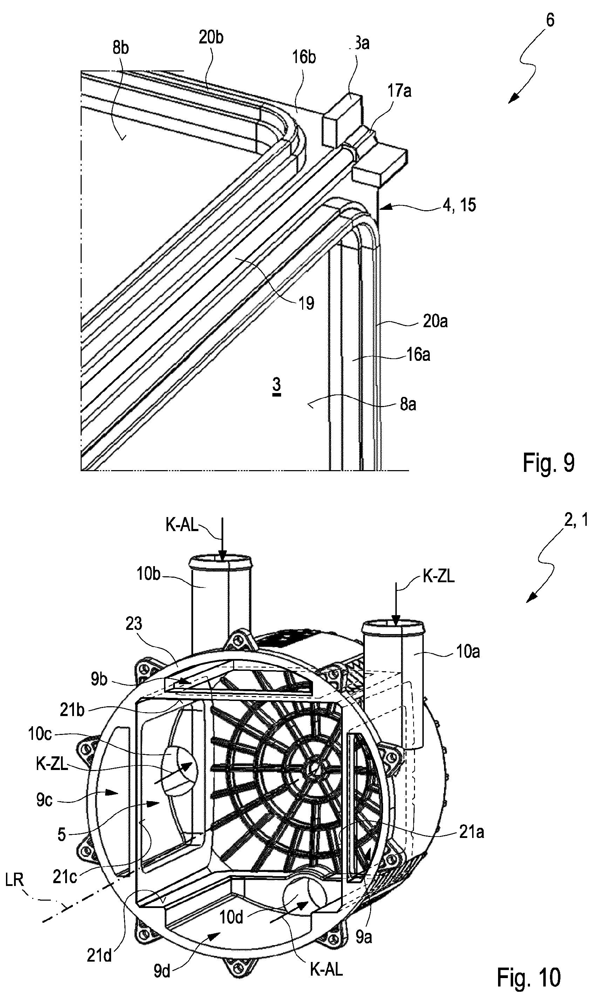

Fig. 5 und Fig. 6 zeigen Ansichten des Membraneinsatzes 6 beim Zusammenbau. Fig. 8 und Fig. 9 zeigen Ansichten des Membraneinsatzes 6 an einem Längsende beim Zusammenbau. Bezugnehmend auf Fig. 5-6 wird zuerst die Endscheibe 11a an den Stapeltragrahmen 4 geklebt. Danach wird der Membranstapel 3 in den Stapeltragrahmen 4 eingesetzt und mit der Endscheibe 11a flächig verklebt. Anschließend wird die Endscheibe 11b mit dem Stapeltragrahmen 4 und mit dem Membranstapel 3 flächig verklebt. Alternativ können die Endscheiben 11a und 11b mit dem Membranstapel 3 verschweißt oder verklippt sein. Wie anhand Fig. 4 bereits erläutert, werden durch die Endscheiben 11a und 11b auch die längsendseitigen Zuluft-Kanäle 13a - hier nicht gezeigt - luftdicht geschlossen. Die Endscheiben 11a, 11b verbessern zudem die mechanische Stabilität des Membraneinsatzes 6.

Bezugnehmend auf Fig. 8-9 wird anschließend zwischen den jeweils benachbarten Tragrahmen 16a, 16b, 16c, 16d jeweils eine Kleberaupe 19 aufgetragen. Die jeweilige Kleberaupe 19 ist dabei zwischen den ersten Verbindungselementen 17a und zweiten Verbindungselementen 17b angeordnet. Die Kleberaupe 19 dichtet dabei den Membranstapel 3 zum Stapeltragrahmen 4 hin ab und bewirkt auch eine Abdichtung zwischen dem Zuluft-Strömungspfad und dem Abluft-Strömungspfad in dem Membranstapel 3. Vorteilhafterweise kann die Kleberaupe 19 aus einem härtenden Klebestoff bestehen, der nach dem Auftragen aushärtet und den Zuluft-Strömungspfad von dem Abluft-Strömungspfad abdichtet.

Bezugnehmend auf Fig. 5-9 sind an den Tragrahmen 16a, 16b, 16c jeweils ein Dichtrahmen 20a, 20b, 20c angeordnet. Der Dichtrahmen 20a, 20b, 20c ist dabei umlaufend ausgebildet und umläuft die zugeordnete Durchströmungsfläche 8a, 8b, 8c. Der jeweilige Dichtrahmen 20a, 20b, 20c liegt an dem Gehäuse 2 - siehe hierzu Fig. 2 - dichtend an und dichten den Membranstapel 3 zu dem Gehäuse 2 hin ab. Durch die jeweiligen Kleberaupen 19 und die jeweiligen Dichtrahmen 20a, 20b, 20c ist eine vollständige Abdichtung des Membranstapels 3 in dem Gehäuse 2 gewährleistet.

Der jeweilige Dichtrahmen 20a, 20b, 20c kann dabei ein separater Dichtkörper sein, der in eine umlaufende Dichtungsaufnahme in dem jeweiligen Tragrahmen 16a, 16b, 16c eingesetzt ist. Alternativ kann der jeweilige Dichtrahmen 20a, 20b, 20c integral an dem jeweiligen Tragrahmen 16a, 16b, 16c ausgeformt sein.

In diesem Ausführungsbeispiel weist der Stapeltragrahmen 4 insgesamt drei Dichtrahmen 20a, 20b, 20c. An dem Tragrahmen 16d ist also kein Dichtrahmen angeordnet. Die Durchströmungsfläche 8d bleibt jedoch durch die Dichtrahmen 20a, 20b, 20c von den Durchströmungsflächen 8a, 8b, 8c abgedichtet. Denkbar ist es jedoch auch, dass der Stapeltragrahmen 4 an dem Tragrahmen 16d einen weiteren Dichtrahmen für die Durchströmungsfläche 8d aufweist.

Der Membraneinsatz 6 bildet eine separate zusammenhängende Baueinheit zum Einsetzen in das Gehäuse 2 des Befeuchters 1. In dem Membraneinsatz 6 ist die notwendige Abdichtung des Membranstapels 3 bereits enthalten. Der Zusammenbau des Befeuchters 1 begrenzt sich dadurch auf Einschieben des Membraneinsatzes 6 in das Gehäuse 2 und das Verschließen des Gehäuses 2 mit einem Deckel. Dadurch kann der Zusammenbau des Befeuchters 1 deutlich vereinfach werden.

Fig. 10 zeigt nun eine teilweise Ansicht des Gehäuses 2 des Befeuchters 1 bzw. nur der Gehäusekörper 23 gezeigt. In dem Gehäuse 2 bzw. in dem Gehäusekörper 23 sind vier rahmenartige Dichtungsflächen 21a, 21b, 21c, 21d erkennbar, die an dem Gehäuse 2 bzw. an dem Gehäusekörper 23 integral ausgeformt sind. Die Dichtungsflächen 21a, 21b, 21c, 21d sind den Durchströmungsflächen 8a, 8b, 8c, 8d zugeordnet. Der jeweilige Dichtrahmen 20a, 20b, 20c des Stapeltragrahmens 4 liegt an den Dichtungsflächen 21a, 21b, 21c an und dadurch ist der Stapeltragrahmen 4 zu dem Gehäuse 2 bzw. zu dem Gehäusekörper 23 hin abgedichtet.

Da in diesem Ausführungsbeispiel kein Dichtrahmen für die Durchströmungsfläche 8d vorgesehen ist, stützt sich der Membraneinsatz 6 an die Dichtungsfläche 21d ohne eine Abdichtung ab.

## Patentansprüche

1. Befeuchter (1) zum Befeuchten einer trockenen Kathoden-Zuluft (K-ZL) mittels einer feuchten Kathoden-Abluft (K-AL) in einem Brennstoffzellensystem,
- wobei der Befeuchter (1) ein Gehäuse (2) mit einem Gehäuseinnenraum (5) und einen Membranstapel (3) aufweist,
- wobei der Membranstapel (3) von der Kathoden-Zuluft (K-ZL) und von der Kathoden-Abluft (K-AL) vermischungsfrei durchströmbar ist,
- wobei der Membranstapel (3) zwei luftdicht verschlossene Stirnflächen (7a, 7b) und vier von Luft durchströmbare Durchströmungsflächen (8a, 8b, 8c, 8d) aufweist,
- wobei die Stirnflächen (7a, 7b) quer zur Längsrichtung (LR) und zueinander beabstandet und die Durchströmungsflächen (8a, 8b, 8c, 8d) parallel zur Längsrichtung (LR) und einander paarweise gegenüberliegend angeordnet sind,
- wobei der Membranstapel (3) in dem Gehäuseinnenraum (5) des Gehäuses (2) so aufgenommen ist, dass zwischen der jeweiligen Durchströmungsfläche (8a, 8b, 8c, 8d) und dem Gehäuse (2) jeweils eine Luftkammer (9a, 9b, 9c, 9d) zum Zuleiten oder Ableiten der Kathoden-Zuluft (K-ZL) in einem Zuluft-Strömungspfad oder zum Zuleiten oder Ableiten der Kathoden-Abluft (K-AL) in einem Abluft-Strömungspfad zu/aus dem Membranstapel (3) gebildet ist,
**dadurch gekennzeichnet,**
- **dass** der Befeuchter (1) einen separaten Stapeltragrahmen (4) aufweist, wobei der Membranstapel (3) in den Stapeltragrahmen (4) und der Stapeltragrahmen (4) in das Gehäuse (2) eingesetzt sind,
- **dass** der Stapeltragrahmen (4) einen fachwerkartigen Grundkörper (15) mit vier rahmenartigen Tragrahmen (16a, 16b, 16c, 16d) aufweist,
- **dass** der jeweilige Tragrahmen (16a, 16b, 16c, 16d) an der zugeordneten Durchströmungsfläche (8a, 8b, 8c, 8d) anliegt und diese randseitig umläuft,
- **dass** der jeweilige Tragrahmen (16a, 16b, 16c, 16d) im Bereich der Längskanten des Membranstapels (3), die zwischen den zwei benachbarten Durchströmungsflächen (8a, 8b, 8c, 8d) des Membranstapels (3) gebildet sind, mit den benachbarten Tragrahmen (16a, 16b, 16c, 16d) unlösbar verbunden ist,
- **dass** der jeweilige Tragrahmen (16a, 16b, 16c, 16d) die jeweilige zugeordnete Durchströmungsfläche (8a, 8b, 8c, 8d) einfasst und die jeweilige Durchströmungsfläche (8a, 8b, 8c, 8d) mit der jeweils zugeordneten Luftkammer (9a, 9b, 9c, 9d) durch den Tragrahmen hindurch fluidisch verbunden ist, und
- **dass** der Stapeltragrahmen (4) den Membranstapel (3) zu dem Gehäuse (2) abdichtet und den Membranstapel (3) in dem Gehäuse (2) sicher festlegt.

2. Befeuchter nach Anspruch 1,
**dadurch gekennzeichnet,**
**dass** der Grundkörper (15) an seinem ersten Längsende ausgebildete erste Verbindungselemente (17a) und/oder mittlere Verbindungselemente und/oder an seinem zweiten Längsende ausgebildete zweite Verbindungselemente (17b) aufweist, die die jeweiligen benachbarten Tragrahmen (16a, 16b, 16c, 16d) miteinander verbinden.

3. Befeuchter nach Anspruch 1 oder 2,
**dadurch gekennzeichnet,**
- **dass** zwischen den benachbarten Tragrahmen (16a, 16b, 16c, 16d) des Grundkörpers (15), insbesondere zwischen den ersten Verbindungselementen (17a) und zweiten Verbindungselementen (17b), eine Kleberaupe (19) angeordnet ist, und
- **dass** die Kleberaupe (19) den Membranstapel (3) zu dem Grundkörper (15) hin abdichtet und insbesondere eine Abdichtung zwischen dem Abluft-Strömungspfad und dem Zuluft-Strömungspfad in dem Membranstapel (3) bewirkt.

4. Befeuchter nach einem der vorangehenden Ansprüche,
**dadurch gekennzeichnet,**
- **dass** der Stapeltragrahmen (4) einen Dichtrahmen (20a, 20b, 20c) oder zwei Dichtrahmen (20a, 20b, 20c) oder drei Dichtrahmen (20a, 20b, 20c) aufweist, wobei der jeweilige Dichtrahmen (20a, 20b, 20c) an dem Gehäuse (2) dichtend anliegt und dadurch der Stapeltragrahmen (4) zu dem Gehäuse (2) hin abgedichtet ist, und
- **dass** der jeweilige Dichtrahmen (20a, 20b, 20c) jeweils einer der Durchströmungsflächen (8a, 8b, 8c) zugeordnet ist und die jeweilige zugeordnete Durchströmungsfläche (8a, 8b, 8c) einfasst, wobei die jeweilige Durchströmungsfläche (8a, 8b, 8c) mit der jeweils zugeordneten Luftkammer (9a, 9b, 9c, 9d) durch den Dichtrahmen (20a, 20b, 20c) hindurch fluidisch verbunden ist.

5. Befeuchter nach Anspruch 4,
**dadurch gekennzeichnet,**
- **dass** der jeweilige Dichtrahmen (20a, 20b, 20c) an dem jeweiligen Tragrahmen (16a, 16b, 16c) des Grundkörpers (15) integral ausgeformt ist, oder
- **dass** der jeweilige Dichtrahmen (20a, 20b, 20c) in jeweils einer Dichtaufnahme des jeweiligen Tragrahmens (16a, 16b, 16c) des Grundkörpers (15) angeordnet und festgelegt ist.

6. Befeuchter nach Anspruch 4 oder 5,
**dadurch gekennzeichnet,**
- **dass** in dem Gehäuse (2) vier rahmenartige und den Durchströmungsflächen (8a, 8b, 8c, 8d) zugeordnete Dichtungsflächen (21a, 21b, 21c, 21d) integral geformt sind, und
- **dass** der jeweilige Dichtrahmen (20a, 20b, 20c) an jeweils einer der Dichtungsflächen (21a, 21b, 21c, 21d) dichtend anliegt.

7. Befeuchter nach einem der vorangehenden Ansprüche,
**dadurch gekennzeichnet,**
- **dass** an dem Stapeltragrahmen (4) an seinem ersten Längsende ausgebildete erste Führungssegmente (18a) und an seinem zweiten Längsende ausgebildete zweite Führungssegmente (18b) zum Führen des in den Stapeltragrahmen (4) eingesetzten Membranstapels (3) in Längsrichtung (LR) an dem Gehäuse (2) angeordnet sind, und
- **dass** die Führungselemente (18a, 18b) im Bereich der Längskanten des Membranstapels (3), die zwischen den zwei benachbarten Durchströmungsflächen (8a, 8b, 8c, 8d) ausgebildet sind, angeordnet sind.

8. Befeuchter nach Anspruch 7,
**dadurch gekennzeichnet,**
**dass** an dem Stapeltragrahmen (4) im Bereich der Stirnflächen (7a, 7b) des Membranstapels (3) Endscheiben (11a, 11b) angeordnet sind und die Führungssegmente (18a, 18b) im Bereich der Endscheiben (11a, 11b) und/oder zwischen den Endscheiben (11a, 11b) ausgebildet sind.

9. Befeuchter nach einem der vorangehenden Ansprüche,
**dadurch gekennzeichnet,**
**dass** der Stapeltragrahmen (4) und das Gehäuse (2) so aufeinander abgestimmt sind, dass eine vorbestimmte Drehlage, insbesondere mittels der Führungselemente (18a, 18b), vorgegeben ist und der Stapeltragrahmen (4) nur in dieser vorbestimmten Drehlage in Längsrichtung (LR) in das Gehäuse (2) einschiebbar ist.

10. Befeuchter nach einem der vorhergehenden Ansprüche,
**dadurch gekennzeichnet,**
- **dass** der Membranstapel (3) als ein rechteckiger Quader mit zwei Stirnflächen (7a, 7b) und vier Durchströmungsflächen (8a, 8b, 8c, 8d) ausgestaltet ist,
- **dass** der Membranstapel (3) mehrere luftdichte und wasserdampfdurchlässige Membrane (12) aufweist, die in Längsrichtung (LR) beabstandet zueinander gestapelt sind,
- **dass** zwischen den einzelnen Membranen (12) Zuluft-Kanäle (13a) und Abluft-Kanäle (13b) gebildet sind, die dem Zuluft-Strömungspfad und dem Abluft-Strömungspfad zugeordnet sind und in Längsrichtung (LR) abwechseln, und
- **dass** die Zuluft-Kanäle (13a) des Zuluft-Strömungspfads zwei diametral gegenüberliegende Durchströmungsflächen (8a, 8c) und die Abluft-Kanäle (13b) des Abluft-Strömungspfads zwei andere diametral gegenüberliegende Durchströmungsflächen (8b, 8d) jeweils fluidisch miteinander verbinden.

11. Membraneinsatz (6) für den Befeuchter (1) nach einem der vorangehenden Ansprüche,
- wobei der Membraneinsatz (6) den Membranstapel (3) nach Anspruch 1 und den Stapeltragrahmen (4) nach Anspruch 1 umfasst,
- wobei der Membranstapel (3) in den Stapeltragrahmen (4) eingesetzt und mit dem Stapeltragrahmen (4) unlösbar verbunden ist, und
- wobei der Membraneinsatz (6) dadurch eine separate zusammenhängende Baueinheit zum Einsetzen in das Gehäuse (2) des Befeuchters (1) bildet.

## Claims

1. Humidifier (1) for humidifying a dry cathode supply air (K-ZL) by means of a humid cathode exhaust air (K-AL) in a fuel cell system,
- wherein the humidifier (1) has a housing (2) with a housing interior (5) and a membrane stack (3),
- wherein the membrane stack (3) can be flowed through by the cathode supply air (K-ZL) and the cathode exhaust air (K-AL) without mixing,
- wherein the membrane stack (3) has two air-tightly sealed end faces (7a, 7b) and four flow-through surfaces (8a, 8b, 8c, 8d) through which air can flow,
- wherein the end faces (7a, 7b) are spaced apart transversely to the longitudinal direction (LR) relative to each other, and the flow-through surfaces (8a, 8b, 8c, 8d) are arranged parallel to the longitudinal direction (LR) and opposite each other in pairs,
- wherein the membrane stack (3) is received in the housing interior (5) of the housing (2) such that an air chamber (9a, 9b, 9c, 9d) is formed between the respective flow-through surface (8a, 8b, 8c, 8d) and the housing (2) for supplying or discharging the cathode supply air (K-ZL) in a supply air flow path or for supplying or discharging the cathode exhaust air (K-AL) in an exhaust air flow path to/from the membrane stack (3),
**characterized in that**
- the humidifier (1) has a separate stack support frame (4), wherein the membrane stack (3) is inserted into the stack support frame (4) and the stack support frame (4) is inserted into the housing (2),
- the stacking support frame (4) has a truss-like base body (15) with four-frame-like support frames (16a, 16b, 16c, 16d),
- the respective support frame (16a, 16b, 16c, 16d) rests against the associated flow through surface (8a, 8b, 8c, 8d) and runs around the edge thereof,
- the respective support frame (16a, 16b, 16c, 16d) in the region of the longitudinal edges of the membrane stack (3) which are formed between the two adjacent flow-through surfaces (8a, 8b, 8c, 8d) of the membrane stack (3), is inseparably connected to the adjacent support frames (16a, 16b, 16c, 16d),
- the respective support frame (16a, 16b, 16c, 16d) encloses the respective associated flow-through surface (8a, 8b, 8c, 8d) and the respective flow-through surface (8a, 8b, 8c, 8d) is fluidically connected to the respective associated air chamber (9a, 9b, 9c, 9d) through the support frame, and
- the stack support frame (4) seals the membrane stack (3) to the housing (2) and securely fixes the membrane stack (3) in the housing (2).

2. Humidifier according to claim 1,
**characterized in that**
the base body (15) has first connecting elements (17a) and/or middle connecting elements formed at its first longitudinal end and/or second connecting elements (17b) formed at its second longitudinal end, which connect the respective adjacent support frames (16a, 16b, 16c, 16d) with each other.

3. Humidifier according to claim 1 or 2,
**characterized in that**
- a gluing seam (19) is arranged between the adjacent support frames (16a, 16b, 16c, 16d) of the base body (15), in particular between the first connecting elements (17a) and second connecting elements (17b), and
- the gluing seam (19) seals the membrane stack (3) to the base body (15) and, in particular, creates a seal between the exhaust air flow path and the supply air flow path in the membrane stack (3).

4. Humidifier according to any one of the preceding claims,
**characterized in that**
- the stack support frame (4) has one sealing frame (20a, 20b, 20c) or two sealing frames (20a, 20b, 20c) or three sealing frames (20a, 20b, 20c), wherein the respective sealing frame (20a, 20b, 20c) sealingly abuts the housing (2), thereby sealing the stack support frame (4) to the housing (2), and
- the respective sealing frame (20a, 20b, 20c) is associated with one of the flow-through surfaces (8a, 8b, 8c) and encloses the respective assigned flow-through surface (8a, 8b, 8c), wherein the respective flow-through surface (8a, 8b, 8c) is fluidically connected to the respective associated air chamber (9a, 9b, 9c, 9d) through the sealing frame (20a, 20b, 20c).

5. Humidifier according to claim 4,
**characterized in that**
- the respective sealing frame (20a, 20b, 20c) is integrally formed on the respective support frame (16a, 16b, 16c) of the base body (15), or
- the respective sealing frame (20a, 20b, 20c) is arranged and fixed in a respective sealing receptacle of the respective support frame (16a, 16b, 16c) of the base body (15).

6. Humidifier according to claim 4 or 5,
**characterized in that**
- four frame-like sealing surfaces (21a, 21b, 21c, 21d) associated with the flow-through surfaces (8a, 8b, 8c, 8d) are integrally formed in the housing (2), and
- the respective sealing frame (20a, 20b, 20c) sealingly abuts a respective one of the sealing surfaces (21a, 21b, 21c, 21d).

7. Humidifier according to any one of the preceding claims,
**characterized in that**
- first guide segments (18a) formed on the stack support frame (4) at its first longitudinal end and second guide segments (18b) formed on its second longitudinal end are arranged on the housing (2) for guiding the membrane stack (3) inserted into the stack support frame (4) in the longitudinal direction (LR), and
- the guide elements (18a, 18b) are arranged in the region of the longitudinal edges of the membrane stack (3), which is formed between the two adjacent flow-through surfaces (8a, 8b, 8c, 8d).

8. Humidifier according to claim 7,
**characterized in that**
end plates (11a, 11b) are arranged on the stack support frame (4) in the region of the end faces (7a, 7b) of the membrane stack (3) and the guide segments (18a, 18b) are formed in the region of the end plates (11a, 11b) and/or between the end plates (11a, 11b).

9. Humidifier according to any one of the preceding claims,
**characterized in that**
the stack support frame (4) and the housing (2) are coordinated with each other in such a way that a predetermined rotational position is specified, in particular by means of the guide elements (18a, 18b), and the stacking support frame (4) can be inserted into the housing (2) in the longitudinal direction (LR) only in this predetermined rotational position.

10. Humidifier according to any one of the preceding claims,
**characterized in that**
- the membrane stack (3) is formed as a rectangular cuboid with two end faces (7a, 7b) and four flow-through surfaces (8a, 8b, 8c, 8d),
- the membrane stack (3) has multiple air-tight and vapor-permeable membranes (12), which are stacked at a distance from each other in the longitudinal direction (LR),
- air supply channels (13a) and air exhaust channels (13b) are formed between the individual membranes (12), which channels are associated with the air supply flow path and the exhaust air flow path and alternate in the longitudinal direction (LR), and
- the supply air channels (13a) of the supply air flow path fluidically connect two diametrically opposite flow-through surfaces (8a, 8c) and the exhaust air channels (13b) of the exhaust air flow path fluidically connect two other diametrically opposite flow-through surfaces (8b, 8d) respectively to each other.

11. Membrane insert (6) for the humidifier (1) according to any one of the preceding claims,
- wherein the membrane insert (6) comprises the membrane stack (3) according to claim 1 and the stack support frame (4) according to claim 1,
- wherein the membrane stack (3) is inserted into the stack support frame (4) and is fixedly connected to the stack support frame (4), and
- wherein the membrane insert (6) thus forms a separate contiguous construction unit to be inserted into the housing (2) of the humidifier (1).

## Revendications

1. Humidificateur (1) pour l'humidification d'un air d'alimentation cathodique sec (K-ZL) au moyen d'un air d'évacuation cathodique humide (K-AL) dans un système de piles à combustible,
- dans lequel l'humidificateur (1) présente un boîtier (2) avec un espace intérieur de boîtier (5) et une pile de membranes (3),
- dans lequel la pile de membranes (3) peut être traversée sans mélange par l'air d'alimentation cathodique (K-ZL) et par l'air d'évacuation cathodique (K-AL),
- dans lequel la pile de membranes (3) présente deux surfaces frontales (7a, 7b) fermées hermétiquement et quatre surfaces de passage (8a, 8b, 8c, 8d) pouvant être traversées par de l'air,
- dans lequel les surfaces frontales (7a, 7b) sont espacées transversalement par rapport à la direction longitudinale (LR) et l'une de l'autre, et les surfaces de passage (8a, 8b, 8c, 8d) sont disposées parallèlement à la direction longitudinale (LR) et par paires opposées les unes aux autres,
- dans lequel la pile de membranes (3) est logée dans l'espace intérieur (5) du boîtier (2) de sorte qu'une chambre à air (9a, 9b, 9c, 9d) est formée entre la surface d'écoulement respective (8a, 8b, 8c, 8d) et le boîtier (2) pour amener ou évacuer l'air d'alimentation cathodique (K-ZL) dans une voie d'écoulement d'air d'alimentation ou pour amener ou évacuer l'air d'évacuation cathodique (K-AL) dans une voie d'écoulement d'air d'évacuation vers/depuis la pile de membranes (3),
**caractérisé en ce que**
- l'humidificateur (1) présente un cadre porteur de pile séparé (4), dans lequel la pile de membranes (3) est insérée dans le cadre porteur de pile (4) et le cadre porteur de pile (4) est inséré dans le boîtier (2),
- le cadre porteur de pile (4) présente un corps de base en treillis (15) avec des cadres porteurs à quatre cadres (16a, 16b, 16c, 16d),
- le cadre porteur respectif (16a, 16b, 16c, 16d) repose sur la surface d'écoulement associée (8a, 8b, 8c, 8d) et en fait le tour côté bord,
- le cadre porteur respectif (16a, 16b, 16c, 16d) est formé au niveau des bords longitudinaux de la pile de membranes (3) qui sont formés entre les deux surfaces d'écoulement adjacentes (8a, 8b, 8c, 8d) de la pile de membranes (3), connecté de manière indétachable aux cadres porteurs adjacents (16a, 16b, 16c, 16d),
- le cadre porteur respectif (16a, 16b, 16c, 16d) entoure la surface d'écoulement (8a, 8b, 8c, 8d) qui lui est associée et la surface d'écoulement respective (8a, 8b, 8c, 8d) est connecté par voie fluidique à la chambre à air (9a, 9b, 9c, 9d) par le cadre porteur, et
- le cadre porteur de pile (4) étanchéifie la pile de membranes (3) par rapport au boîtier (2) et fixe solidement la pile de membranes (3) dans le boîtier (2).

2. Humidificateur selon la revendication 1,
**caractérisé en ce que**
le corps de base (15) présente de premiers éléments de connexion (17a) et/ou des éléments de connexion centraux formés à sa première extrémité longitudinale et/ou de seconds éléments de connexion (17b) formés à sa seconde extrémité longitudinale, qui connectent entre eux les cadres porteurs adjacents respectifs (16a, 16b, 16c, 16d).

3. Humidificateur selon la revendication 1 ou 2,
**caractérisé en ce que**
- un cordon de colle (19) est disposé entre les cadres porteurs adjacents (16a, 16b, 16c, 16d) du corps de base (15), en particulier entre les premiers éléments de connexion (17a) et les seconds éléments de connexion (17b), et
- le cordon de colle (19) étanchéifie la pile de membranes (3) par rapport au corps de base (15) et réalise en particulier une étanchéité entre la voie d'écoulement d'air d'évacuation et la voie d'écoulement d'air d'alimentation dans la pile de membranes (3).

4. Humidificateur selon l'une quelconque des revendications précédentes,
**caractérisé en ce que**
- le cadre porteur de pile (4) présente un cadre d'étanchéité (20a, 20b, 20c) ou deux cadres d'étanchéité (20a, 20b, 20c) ou trois cadres d'étanchéité (20a, 20b, 20c), dans lequel le cadre d'étanchéité respectif (20a, 20b, 20c) s'appuie de manière étanche contre le boîtier (2) et le cadre porteur de pile (4) est ainsi étanchéifié par rapport au boîtier (2), et
- le cadre d'étanchéité respectif (20a, 20b, 20c) est associé à une des surfaces de passage (8a, 8b, 8c) et entoure la surface de passage (8a, 8b, 8c) qui lui est associée, dans lequel la surface de passage (8a, 8b, 8c) est connectée par voie fluidique à la chambre à air respective associée (9a, 9b, 9c, 9d) à travers le cadre d'étanchéité (20a, 20b, 20c).

5. Humidificateur selon la revendication 4,
**caractérisé en ce que**
- le cadre d'étanchéité respectif (20a, 20b, 20c) est formé d'un seul tenant sur le cadre porteur respectif (16a, 16b, 16c) du corps de base (15), ou
- le cadre d'étanchéité respectif (20a, 20b, 20c) est disposé et fixé dans un logement d'étanchéité respectif du cadre porteur respectif (16a, 16b, 16c) du corps de base (15).

6. Humidificateur selon la revendication 4 ou 5,
**caractérisé en ce que**
- quatre surfaces d'étanchéité (21a, 21b, 21c, 21d) à cadre et associées aux surfaces d'écoulement (8a, 8b, 8c, 8d) sont formées d'un seul tenant dans le boîtier (2), et
- le cadre d'étanchéité respectif (20a, 20b, 20c) repose de manière étanche sur une des surfaces d'étanchéité (21a, 21b, 21c, 21d).

7. Humidificateur selon l'une quelconque des revendications précédentes,
**caractérisé en ce que**
- de premiers segments de guidage (18a) formés sur le cadre porteur de pile (4) à sa première extrémité longitudinale et de seconds segments de guidage (18b) formés sur sa seconde extrémité longitudinale pour le guidage de la pile de membranes (3) insérée dans le cadre porteur de pile (4) dans le sens longitudinal (LR) sur le boîtier (2), et
- les éléments de guidage (18a, 18b) sont disposés au niveau des bords longitudinaux de la pile de membranes (3) qui sont formés entre les deux surfaces d'écoulement adjacentes (8a, 8b, 8c, 8d).

8. Humidificateur selon la revendication 7,
**caractérisé en ce que**
des disques d'extrémité (11a, 11b) sont disposés sur le cadre porteur de pile (4) au niveau des faces d'extrémité (7a, 7b) de la pile de membranes (3) et les segments de guidage (18a, 18b) sont formés au niveau des disques d'extrémité (11a, 11b) et/ou entre les disques d'extrémité (11a, 11b).

9. Humidificateur selon l'une quelconque des revendications précédentes,
**caractérisé en ce que**
le cadre porteur de pile (4) et le boîtier (2) sont adaptés l'un à l'autre de sorte qu'une position de rotation prédéterminée est prédéfinie, en particulier au moyen des éléments de guidage (18a, 18b), et le cadre porteur de pile (4) peut être inséré dans le boîtier (2) dans le sens longitudinal (LR) uniquement dans cette position de rotation prédéfinie.

10. Humidificateur selon l'une quelconque des revendications précédentes,
**caractérisé en ce que**
- la pile de membranes (3) est conçue comme un parallélépipède rectangle avec deux surfaces frontales (7a, 7b) et quatre surfaces d'écoulement (8a, 8b, 8c, 8d),
- la pile de membranes (3) présente plusieurs membranes (12) hermétiques et perméables à la vapeur d'eau, qui sont empilées les unes sur les autres à distance les unes des autres en direction longitudinale (LR),
- des canaux d'air d'alimentation (13a) et des canaux d'air d'évacuation (13b) sont formés entre les membranes individuelles (12), qui sont associés à la voie d'écoulement d'air d'alimentation et à la voie d'écoulement d'air d'évacuation et qui alternent dans le sens longitudinal (LR), et
- les canaux d'air d'alimentation (13a) de la voie d'écoulement d'air d'alimentation connectent par voie fluidique entre elles deux surfaces d'écoulement diamétralement opposées (8a, 8c) et les canaux d'air d'évacuation (13b) de la voie d'écoulement d'air d'évacuation connectent par voie fluidique entre elles deux autres surfaces d'écoulement diamétralement opposées (8b, 8d).

11. Insert à membrane (6) pour l'humidificateur (1) selon l'une quelconque des revendications précédentes,
- dans lequel l'insert à membrane (6) comprend la pile de membranes (3) selon la revendication 1 et le cadre porteur de pile (4) selon la revendication 1,
- dans lequel la pile de membranes (3) est insérée dans le cadre porteur de pile (4) et connectée de manière non détachable au cadre porteur de pile (4), et
- dans lequel l'insert à membrane (6) forme ainsi un module cohérent séparé destiné à être inséré dans le boîtier (2) de l'humidificateur (1).
